# EUROPÄISCHE PATENTSCHRIFT

(11) **EP 2 997 813 B1**
(45) Veröffentlichungstag und Bekanntmachung des Hinweises auf die Patenterteilung: **28.06.2017**
(21) Anmeldenummer: 15174510.6
(22) Anmeldetag: 30.06.2015
(51) Int. Cl.: A01F 12/26

(54) **MÄHDRESCHER**
COMBINE HARVESTER
MOISSONNEUSE-BATTEUSE

(30) Priorität: 22.09.2014 DE 102014113641
(43) Veröffentlichungstag der Anmeldung: 23.03.2016
(73) Patentinhaber: CLAAS Selbstfahrende Erntemaschinen GmbH, 33428 Harsewinkel (DE)
(72) Erfinder: Bußmann, Jens, 49179 Ostercappeln (DE); Holtmann, Bernd, 48324 Sendenhorst (DE)

(56) Entgegenhaltungen:
- EP-A1- 2 684 443
- WO-A1-97/07660
- WO-A2-2008/149239

## Beschreibung

Die vorliegende Erfindung betrifft einen Mähdrescher gemäß dem Oberbegriff des Anspruches 1.

Mähdrescher mit einem nach dem Tangentialflussprinzip arbeitenden Dreschvorrichtung und einer der Dreschvorrichtung nachgeordneten, nach dem Axialflussprinzip arbeitenden Abscheideeinrichtung, welche zumindest einen mit sich radial nach außen erstreckenden Werkzeugen versehenen Rotor sowie diesen zumindest abschnittsweise in Umfangsrichtung umgebende Abscheidekörbe und Gehäuseelemente, zur Separierung von Bestandteilen aus einem Erntegutstrom sind hinlänglich aus dem Stand der Technik bekannt. Von der Dreschvorrichtung wird der Erntegutstrom an die nach dem Axialflussprinzip arbeitende Abscheideeinrichtung übergeben, welcher die Aufgabe zu kommt, den verbleibenden Anteil an Korn aus dem Erntegutstrom abzuscheiden, welchen die nach dem Tangentialflussprinzip arbeitende Dreschvorrichtung nicht separieren konnte. Mähdreschern der eingangs genannten Art ist gemein, dass das Abscheideverhalten über die axiale Ausdehnung der Abscheideeinrichtung hinweg sich verändert. Insbesondere nimmt mit zunehmendem Abstand vom Einlaufbereich der Anteil an von der Abscheideeinrichtung abgeschiedenem Korn im Verhältnis zu dem im Erntegutstrom befindlichen Kornanteil ab. Hierfür ursächlich ist die Ausbildung einer sich in Umfangsrichtung bewegenden, sich zunehmend zu einer Art Matte verdichtenden Erntegutmasse, die im Wesentlichen aus Strohbestandteilen besteht. Die Durchlässigkeit dieser Gutmatte nimmt zum Abgabebereich der Abscheideeinrichtung hin zunehmend ab. Damit gehen Kornverluste einher, da das in oder auf der Gutmatte befindliche Korn gemeinsam mit diesem aus der Abscheideeinrichtung ausgebracht und entweder einer Häckselvorrichtung des Mähdreschers zugeführt oder direkt als Schwad auf dem abgeernteten Feld abgelegt wird.

Ein Mähdrescher der eingangs genannten Art ist aus der WO 2008/149239 A2 bekannt.

Es ist die Aufgabe der vorliegenden Erfindung, einen Mähdrescher gemäß dem Oberbegriff des Anspruches 1 derart weiterzubilden, dass dieser sich durch ein verbessertes und effizienteres Abscheideverhalten seiner Abscheideeinrichtung auszeichnet.

Diese Aufgabe wird erfindungsgemäß durch die kennzeichnenden Merkmale des Anspruches 1 gelöst.

Vorteilhafte Weiterbildungen der Erfindung sind Gegenstand der Unteransprüche.

Gemäß Anspruch 1 wird vorgeschlagen, dass die Abscheideeinrichtung in axialer Richtung des Rotors zumindest eine sprunghafte Änderung des lichten Querschnitts zwischen einem ersten, aus zumindest einem ersten Abscheidesegment und zumindest einem ersten Gehäuseelement gebildeten Abschnitt und zumindest einem weiteren Abschnitt, der aus jeweils zumindest einem von dem ersten Abschnitt abweichend dimensionierten weiteren Abscheidesegment und einem weiteren Gehäuseelement gebildet ist, aufweist. Die zumindest eine sprunghafte Veränderung des lichten Querschnittes erlaubt eine abrupte Ausdehnung der Gutmatte in radialer Richtung. Hierdurch kann die Gutmatte eine starke Auflockerung erfahren, was das Hindurchtreten von abzuscheidendem Korn aus der Erntegutmasse in dem sich erweiternden Abschnitt erleichtert. Die Quantität der Abscheideleistung des zumindest einen weiteren Abschnitts der Abscheideeinrichtung lässt sich auf diese Weise deutlich erhöhen. Ein weiterer Vorteil ergibt sich durch die zumindest sprunghafte Vergrößerung der Abscheidefläche des zumindest einen weiteren Abschnittes auf Grund der größeren Dimensionierung des zumindest einen weiteren Abscheidesegmentes, was entsprechend mit einer Siebflächenvergrößerung und somit einer höheren Abscheidemenge einhergeht.

Die sprunghafte Änderung des lichten Querschnittes kann durch eine sprunghafte Vergrößerung des Umfangs der Abscheidekörbe und der zu diesen korrespondierend angeordneten Gehäuseelemente des zumindest einen weiteren Abschnittes gegenüber denen des ersten Abschnittes erreicht werden.

Dabei sollte der lichte Querschnitt des ersten Abschnittes kleiner sein, als der lichte Querschnitt des zumindest einen weiteren Abschnittes der Abscheideeinrichtung. Der Effekt der Auflockerung tritt somit in dem Bereich der Abscheidevorrichtung auf, in welchem der Kornanteil in dem Erntegutstrom in Förderrichtung bereits deutlich abgenommen hat und in welchem das Hindurchtreten des im Erntegutstrom verbliebenen Korns auf Grund der Bildung der im Wesentlichen aus Stroh und sonstigen Nichtkornbestandteilen bestehenden Erntegutmatte verbessert werden soll. Hierbei kommt die Zunahme der Umfangsgeschwindigkeit positiv zum Tragen, die sich in Folge der Umfangsänderung des zumindest einen weiteren Abschnittes einstellt. Die Erntegutmatte wird stärker aufgerissen und über eine größere Umfangsfläche der Abscheideeinrichtung verteilt.

Vorzugsweise kann der lichte Querschnitt des ersten Abschnittes und des zumindest eine weiteren Abschnittes entlang ihrer jeweiligen axialen Erstreckung entlang des Rotors im Wesentlichen gleichbleibend sein. Der Erntegutstrom kann somit in beiden Abschnitten mit einem im Wesentlichen gleichbleibenden Druck beaufschlagt werden, der von dem den Rotor umgebenden Abscheidekörben und Gehäuseelementen ausgeübt wird, welcher sich nur an der Stelle der sprunghaften Querschnittsänderung schlagartig ändert. Nach der Auflockerung der Erntegutmatte durch die Änderung des lichten Querschnittes stellt sich im weiteren Verlauf des zumindest einen weiteren Abschnittes erneut ein im Wesentlichen gleichbleibender Druck ein, der von dem den Rotor umgebenden Abscheidekörben und Gehäuseelementen ausgeübt wird.

Insbesondere kann der Rotor entlang seiner axialen Erstreckung über den ersten Abschnitt und den zumindest eine weiteren Abschnitt hinweg einen gleichbleibenden Außendurchmesser aufweisen. Somit kann eine den Rotor umhüllende Mantelfläche im ersten Abschnitt und im zumindest einen weiteren Abschnitt der Abscheideeinrichtung einen über die Länge des Rotors hinweg konstanten Außendurchmesser aufweisen. Die Rotordrehzahl, welche beispielsweise in Abhängigkeit von der Erntegutart und vorherrschenden Erntebedingungen variierbar ist, kann relativ gesehen konstant bleiben.

Dabei können die auf dem Rotor angeordneten Werkzeuge im Bereich des ersten Abschnittes eine geringere radiale Erstreckung nach außen aufweisen, als die Werkzeuge im Bereich des zumindest einen weiteren Abschnittes. Dies resultiert in einer Zunahme der Umfangsgeschwindigkeit in axialer Richtung des Rotors. Hierdurch kann eine bessere Auflockerung der Erntegutmatte durch die auf dem Rotor angeordneten Werkzeuge in dem zumindest einen weiteren Abschnitt der Abscheideeinrichtung erreicht werden. Die Erntegutmatte Erntegut wird durch die Änderung der Umfangsgeschwindigkeit der Werkzeuge im Bereich des zumindest einen weiteren Abschnittes.

Insbesondere kann sich die Anordnung von Werkzeugen geringerer radialer Erstreckung auf dem Rotor in axialer Richtung über den ersten Abschnitt hinaus abschnittsweise in den zumindest einen weiteren Abschnitt erstrecken. Hierdurch kann ein weicherer Übergang realisiert werden, da auf dem zumindest einen weiteren Abschnitt zunächst die gleichen Werkzeuge zu Einsatz kommen, wie auf dem ersten Abschnitt. Der Durchmesser des Hüllkreises der Werkzeuge des zumindest einen weiteren Abschnittes wird abschnittsweise in axialer Richtung versetzt an den sprunghaft geänderten lichten Querschnitt des zweiten Abschnittes angepasst.

Des Weiteren kann der Rotor entlang seiner axialen Erstreckung innerhalb des ersten Abschnittes einen anderen Außendurchmesser aufweisen, als entlang seiner axialen Erstreckung innerhalb des zumindest einen weiteren Abschnittes. Gemäß dieser Ausführungsform kann der Rotor gleichfalls eine sprunghafte Veränderung seines Außendurchmessers aufweisen, wobei diese Änderung des Außendurchmessers derart gewählt ist, dass trotz einer Vergrößerung des Außendurchmessers des Rotors in dem zumindest einen weiteren Abschnitt es zu einer sprunghaften Vergrößerung des lichten Querschnitts kommt Vorzugsweise kann der Rotor hierzu zumindest zweiteilig ausgeführt sein.

Vorteilhafterweise kann die Abscheidefläche des aus ersten Abscheidekörbe bestehenden ersten Abscheidesegmentes des ersten Abschnittes unabhängig von der Abscheidefläche des aus weiteren Abscheidekörben bestehenden zumindest einen weiteren Abscheidesegmentes des zumindest einen weiteren Abschnittes einstellbar sein. Hierzu können die ersten Abscheidekörbe des ersten Abschnittes mit einstellbaren Korbabdeckungen versehen sein. Die Korbabdeckungen können der Abdeckung einzelner erster Abscheidekörbe in radialer Richtung dienen. Diese Korbabdeckungen erlauben es, den Abgabepunkt in axialer Richtung des ersten Abschnittes zu verändern, das heißt in Richtung des zumindest einen weiteren Abschnittes zu verschieben. Das weitere Abscheidesegment des zumindest einen weiteren Abschnitt kann ebenfalls mit entsprechenden Korbabdeckungen ausgeführt sein.

Insbesondere kann die Abscheidefläche der jeweiligen ersten Abscheidekörbe des ersten Abschnittes unabhängig voneinander einstellbar sein. Die individuelle Abdeckung einzelner Korbabschnitte ermöglicht eine gezielte Verlagerung des Abgabepunktes in Umfangrichtung, was insbesondere bei einer auftretenden Querneigung am Hang sinnvoll ist. Der Abgabepunkt kann dadurch in Richtung der Hangseite verlagert werden, was zu einer gleichmäßigeren Beschickung einer nachgeordneten Reinigungsvorrichtung führen kann.

Vorzugsweise kann der Abstand der ersten Abscheidekörbe zum Rotor sowie der zweiten Abscheidekörbe zum Rotor veränderbar sein. In Abhängigkeit von der zu verarbeitenden Erntegutart ist es sinnvoll, den radialen Abstand der Abscheidekörbe zum Rotor beziehungsweise zum Hüllkreis der Werkzeuge auf dem Rotor variieren zu können. So kann insbesondere bei der Verarbeitung Getreide ein geringerer Abstand gewählt werden, als bei der Verarbeitung von Mais.

In vorteilhafter Weiterbildung kann die sprunghafte Querschnittsänderung im Wesentlichen im mittleren Bereich der Abscheideeinrichtung auftreten. Diese kann vorzugsweise im Übergangsbereich zwischen zwei Abscheidekörben der Abscheideeinrichtung vorgesehen sein, so dass deren axiale Erstreckung in Längsrichtung der Abscheideeinrichtung einheitlich ist, das heißt innerhalb eines Abscheidesegmentes nicht verschieden dimensionierte Abscheidekörbe zum Einsatz kommen.

Alternativ kann die Anzahl sprunghafter Querschnittsänderungen einem ganzzahligen Quotienten der Gesamtzahl von an der Abscheideeinrichtung vorgesehenen Abscheidekörben entsprechen.

In bevorzugter Weiterbildung kann eine asymmetrische Anordnung der sprunghaften Querschnittsänderungen entlang der axialen Erstreckung der Abscheideeinrichtung vorgesehen sein. So kann beispielsweise eine erste Querschnittsänderung nach drei oder vier Abscheidekörben erfolgen, während eine zweite und eine dritte sprunghafte Querschnittsänderung nach zwei beziehungsweise nur einem weiteren Abscheidekorb vorgesehen sind.

Weiterhin kann im Übergang zum Abgabebereich der Abscheideeinrichtung eine weitere sprunghafte Querschnittsänderung vorgesehen sein, wobei der lichte Querschnitt des Abgabebereiches größer ist, als der lichte Querschnitts des zumindest einen weiteren Abschnittes der Abscheideeinrichtung. Eine zusätzliche Querschnittsänderung im Abgabebereich der Abscheidevorrichtung, die mit einer weiteren Querschnittsvergrößerung einhergeht, kann zu einer Verbesserung der Abgabe von Stroh beitragen. Das Risiko des sich Ablagerns und Anstauens von Stroh im Abgabebereich der Abscheideeinrichtung lässt sich damit verringern. Auch kann dadurch eine gleichmäßigere Abgabe des Strohs an eine der Abscheideeinrichtung nachgeordnete Häckselvorrichtung erreicht werden, was wiederum mit einer Verbesserung der Häcksel- und Verteilqualität einhergeht.

Die gestufte Zunahme des Querschnittes ausgehend vom Einlaufbereich hin zum Abgabebereich gestattet es, den Rotor in Richtung des Hecks des Mähdreschers zu bewegen, um diesen aus dem Mähdrescher herausziehen zu können.

Die vorliegende Erfindung wird nachstehend anhand eines in den Zeichnungen dargestellten Ausführungsbeispiels näher erläutert.

Es zeigen:
- Fig. 1: eine schematische Teilansicht eines Mähdreschers;
- Fig. 2: eine Seitenansicht einer erfindungsgemäßen Abscheideeinrichtung eines Mähdreschers;
- Fig. 3: eine Schnittansicht entlang der Linie 3-3 gemäß Fig.2;
- Fig. 4: eine Schnittansicht entlang der Linie 4-4 gemäß Fig.2;
- Fig. 5: eine Ansicht der Abscheideeinrichtung gemäß Fig. 2 von unten.

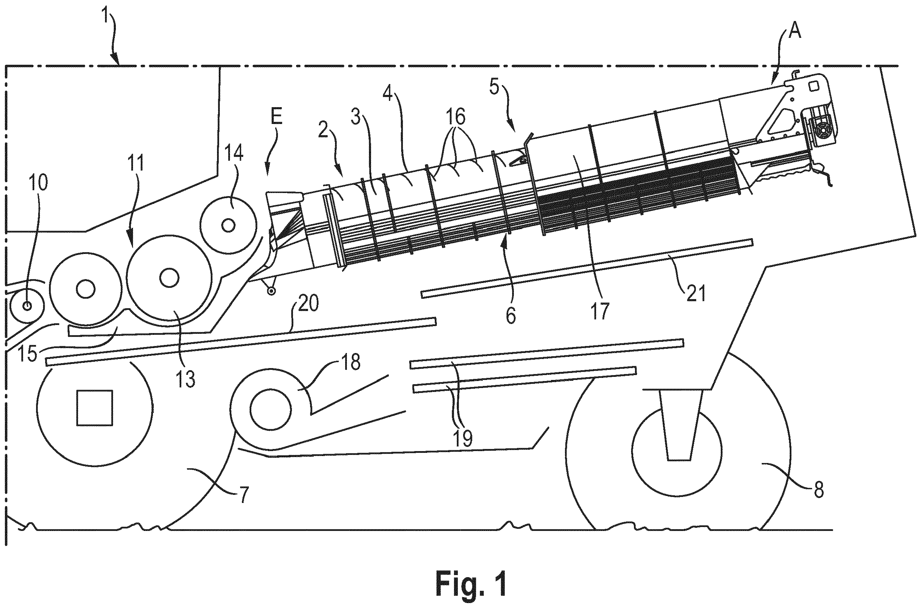

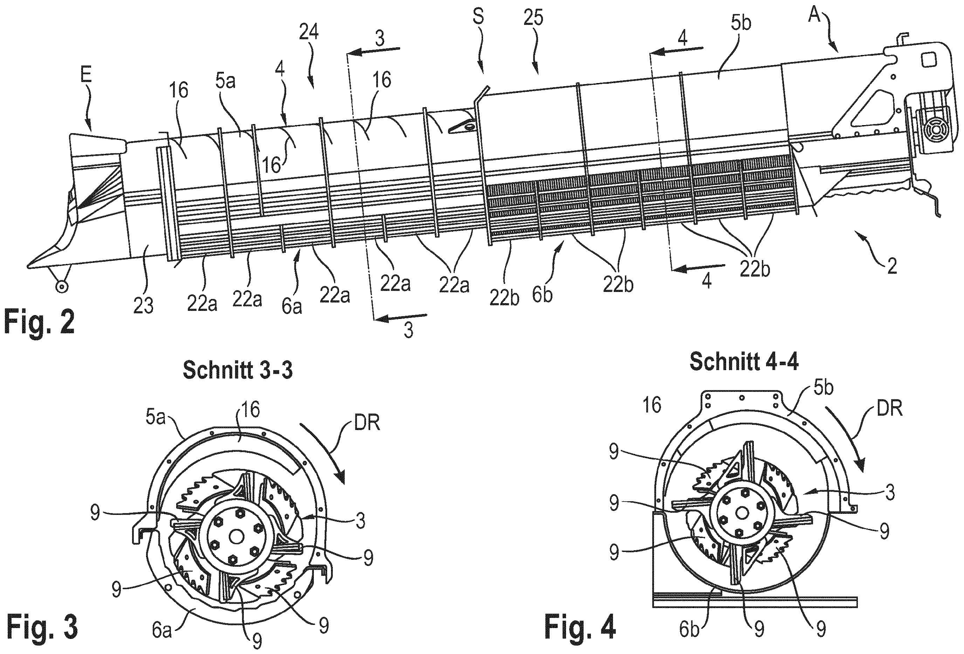

Der in der Fig. 1 teilweise dargestellte Mähdrescher 1 ist mit einer nach dem Axialflussverfahren arbeitenden Abscheideeinrichtung 2 ausgerüstet, die zumindest einen Rotor 3 umfasst. Die Darstellung in Fig. 2 zeigt eine Seitenansicht der Abscheidevorrichtung 2. Der zumindest eine Rotor 3 ist abschnittsweise von einem Rotorgehäuse 4 umschlossen. Die Abscheideeinrichtung 2 weist mehrere funktionale Bereiche auf. Diese Bereiche umfassen einen Einlaufbereich E, einen Abscheidebereich S und einen Abgabebereich A, wie in Fig. 2 dargestellt ist. Das Rotorgehäuse 4 besteht aus einem Oberteil in Form zumindest eines ersten Gehäuseelementes 5a und eines zweiten Gehäuseelementes 5b und einem Unterteil in Form von aus einer Mehrzahl von ersten Abscheidekörben 22a bestehenden ersten Abscheidesegment 6a und einer Mehrzahl von zweiten Abscheidekörben 22b bestehenden zweiten Abscheidesegment 6b.

Im dargestellten Ausführungsbeispiel liegt die Drehachse jedes Rotors 3 quer zu den Radachsen von Räderpaaren 7, 8 des Mähdreschers. Demzufolge ist die Förderrichtung jedes Rotors 3 entgegengesetzt zur Vorwärtsfahrtrichtung des Mähdreschers 1. Außerdem ist der Mähdrescher 1 in an sich bekannter Weise mit einem nicht dargestellten Mähtisch und einem das Mähgut zu einer Dreschvorrichtung 11 fördernden Schrägförderer 10 ausgerüstet, von dem nur das hintere Ende dargestellt ist. Die Dreschvorrichtung 11 beinhaltet eine Vorbeschleunigungstrommel 12, eine Dreschtrommel 13, zumindest einen Dreschkorb 15 und eine Zuführtrommel 14, die unmittelbar vor dem Einlaufbereich E des Trennrotors 3 quer zu dessen Drehachse gelagert sind. Unterhalb der Dreschvorrichtung 11 befindet sich ein so genannter Vorbereitungsboden 20, auf welchen von der Dreschvorrichtung 11 abgeschiedenes Erntegut, im Wesentlichen Korn, gelangt. Durch den Förderboden 21 wird der von der Trenneinrichtung 2 abgeschiedene Erntegutstrom an den Vorbereitungsboden 20 übergeben. Vom Vorbereitungsboden 20 aus gelangt der Erntegutstrom auf die Siebe der Reinigungseinrichtung 19, welche die Aufgabe hat, das ausgedroschene Korn von den Nichtkornbestandteilen zu trennen.

Ferner ist im dargestellten Ausführungsbeispiel die Drehachse jedes Rotors 3 gegen die Horizontale geneigt, wobei sie nach hinten, das heißt in Richtung des Abgabebereiches A jedes Rotors 3 ansteigt. Der Rotor 3 weist eine geschlossene Mantelfläche 17 auf. Um das Erntegut kontinuierlich zu transportieren, sind auf der Mantelfläche 17 des Rotors 3 eine Vielzahl von in Umfangsrichtung verteilt angeordneten Werkzeugen 9 vorgesehen, die sich in radialer Richtung zur Mantelfläche 17 nach außen erstrecken. Damit die kontinuierliche Förderung des von der Dreschvorrichtung 11 an die Abscheideeinrichtung 2 abgegebenen Erntegutes gewährleistet ist, sind an der Innenseite der Gehäuseelemente 5a, 5b und gegebenenfalls auch an der Innenseite der jeweiligen ersten und zweiten Abscheidekörbe 22a, 22b Leitschienen 16 angesetzt, die entweder achsparallel zur Drehachse jedes Trennrotors 3 oder ebenfalls wendel- oder spiralförmig verlaufen können. Unterhalb der ersten und zweiten Abscheidekörbe 22a, 22b befindet sich ein Förderboden 21, welchem ein von dem Rotor 3 durch die ersten und zweiten Abscheidekörbe 22a, 22b hindurch abgeschiedener Erntegutstrom, der Korn sowie Nichtkornbestandteile, die insbesondere aus Kaff und Kurzstroh bestehen, umfasst, zugeführt werden.

Ferner ist der in der Fig. 1 nur teilweise dargestellte Mähdrescher 1 noch mit einem unterhalb des Rotors 3 liegenden Reinigungsgebläse 18 und einer ebenfalls unter des Rotors 3 liegenden, zumindest ein Sieb aufweisenden Reinigungseinrichtung 19 ausgerüstet. In nicht näher dargestellter Weise ist im Ausgabebereich A des Rotors 3 noch eine allgemein bekannte Verteilereinrichtung für Häckselgut angeordnet, welches der Verteileinrichtung von einer dem Ausgabebereich A des Rotors 3 nachgeordneten Häckseleinrichtung zugeführt wird.

In Fig. 2 ist eine schematische Seitenansicht der Abscheideeinrichtung 2 gemäß Fig. 1 dargestellt. Der im Wesentlichen trichterartige Einlaufbereich E der Abscheideeinrichtung 2 dient der Annahme des von der Dreschvorrichtung 11 zugeführten Erntegutes. An den Einlaufbereich E schließt sich ein im Wesentlichen kreiszylindrischer Einlaufabschnitt 23 an. Der Einlaufabschnitt 23 ist dabei bevorzugt als ein Rohrsegment ausgeführt und weist eine in Umfangsrichtung vollständig geschlossene Mantelfläche auf. Von dem Einlaufabschnitt 23 gelangt das Erntegut in einen ersten Abschnitt 24 des Abscheidebereiches S, welcher aus dem zumindest einen ersten Gehäuseelement 5a und dem zumindest einen mit mehreren ersten Abscheidekörben 22a ausgeführten ersten Abscheidesegment 6a gebildet ist. Der erste Abschnitt 24 unterscheidet sich von dem Einlaufabschnitt 23 hinsichtlich seines Querschnittes sowie seiner Geometrie. Im Gegensatz zu dem Einlaufabschnitt 23 ist der Querschnitt des ersten Abschnittes 24 annähernd oval ausgeführt, wie der Schnittansicht in Fig. 3 zu entnehmen ist.

An den ersten Abschnitt 24 des Abscheidebereiches S schließt sich ein zweiter Abschnitt 25 an. Der zweite Abschnitt 25 des Abscheidesegmentes S unterscheidet sich hinsichtlich seines konstruktiven Aufbaus nicht von dem des ersten Abschnittes 24. Der zweite Abschnitt 25 umfasst zumindest ein zweites Gehäuseelement 5b und zumindest ein aus mehreren Abscheidekörben 22b gebildetes zweites Abscheidesegment 6b. Wie auch der erste Abschnitt 24 ist der zweite Abschnitt 25 annährend oval ausgeführt, wie der Schnittansicht in Fig. 4 zu entnehmen ist.

Die jeweiligen Querschnitte des ersten Abschnittes 24 und des zweiten Abschnittes 25 sind entlang ihrer Erstreckung in Längsrichtung der Abscheideeinrichtung 2 im Wesentlichen gleichbleibend. Jedoch weist der zweite Abschnitt 25 im Gegensatz zu dem ersten Abschnitt 24 einen größeren lichten Querschnitt auf. Dies wird durch eine sprunghafte Änderung des Querschnitts des zweiten Abschnittes 25 in dem Übergang vom ersten Abschnitt 24 zu dem zweiten Abschnitt 25 erreicht. Der zweite Abschnitt 25 mündet endseitig in den Ausgabebereich A, welcher dem Ableiten des Erntegutes an die nachgeordnete Häckseleinrichtung dient. Mit der sprunghaften Vergrößerung des lichten Querschnittes des zweiten Abschnittes 25 gegenüber dem des ersten Abschnittes 24 wird eine Verbesserung des Abscheideverhaltens erreicht. Einerseits wird durch die Erhöhung der Umfangsgeschwindigkeit bei dem Übergang der Erntegutmatte von dem ersten Abschnitt 24 in den zweiten Abschnitt 25 die Erntegutmatte stärker aufgerissen und andererseits verteilt sich diese über eine größere Umfangsfläche im zweiten Abschnitt 25. Zudem vergrößert sich die Abscheidefläche des zweiten Abscheidesegmentes 6b gegenüber der des ersten Abscheidesegmentes 6a. Die Änderung des lichten Querschnittes wird durch die Vergrößerung der Radien des zweiten Gehäuseelementes 5b und des zweiten Abscheidesegmentes 6b erreicht.

Die Schnittansichten gemäß den Fig. 3 und 4 verdeutlichen die sprunghafte Änderung des lichten Querschnitts zwischen dem ersten Abschnitt 24 und dem zweiten Abschnitt 25, welche im Wesentlichen im mittleren Bereich der Abscheideeinrichtung 2 auftritt. Der Rotor 3 weist entlang seiner axialen Erstreckung über den ersten Abschnitt 24 und den zweiten Abschnitt 25 hinweg einen gleichbleibenden Durchmesser auf. Ein Pfeil DR repräsentiert die Rotationsrichtung des Rotors 3. Der Rotor 3 trägt somit nicht zu einer Änderung des lichten Querschnittes zwischen dem ersten Abschnitt 24 und dem zweiten Abschnitt 25 bei. Hingegen weisen die auf dem Rotor 3 angeordneten Werkzeuge 9 im Bereich des ersten Abschnittes 24 eine geringere radiale Erstreckung nach außen auf, als die Werkzeuge 9 im Bereich des zweiten Abschnittes 25 der Abscheideeinrichtung 2. Die Verlängerung der radialen Erstreckung der Werkzeuge des zweiten Abschnittes 25 ist der sprunghaften Vergrößerung des lichten Querschnittes geschuldet, um für eine sichere Gutmitnahme im zweiten Abschnitt 25 zu sorgen. Gemäß einer bevorzugten Weiterbildung kann auch vorgesehen sein, dass sich die Anordnung von Werkzeugen 9 geringerer radialer Erstreckung auf dem Rotor 3 in axialer Richtung über den ersten Abschnitt 24 hinausgehend abschnittsweise in den zweiten Abschnitt 25 erstrecken.

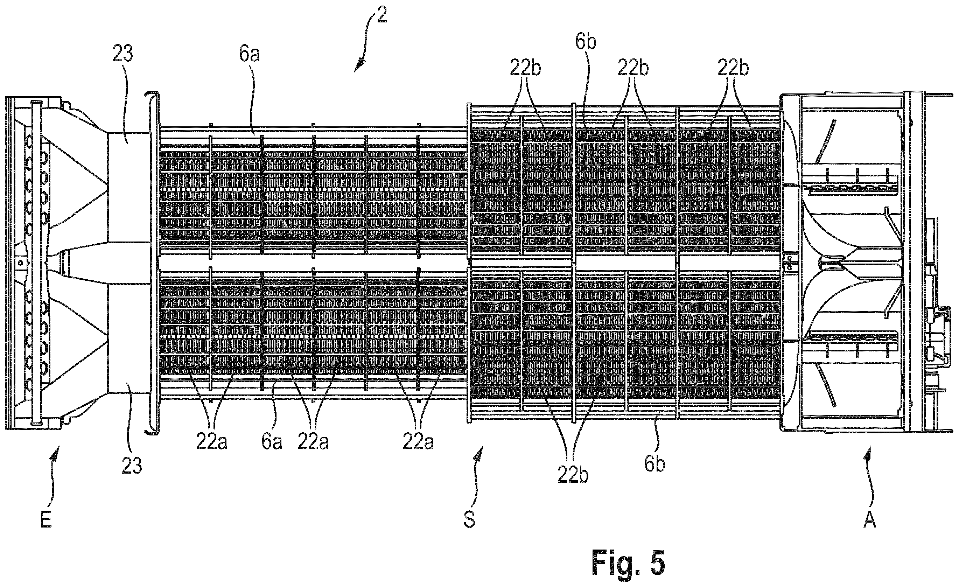

Die Darstellung in Fig. 5 zeigt die Abscheideeinrichtung 2 in einer Ansicht von unten auf das erste Abscheidesegment 6a und das zweite Abscheidesegment 6b. Die Darstellung zeigt die parallele Anordnung zweier Rotoren 3 der Abscheideeinrichtung 2 nebeneinander. Wie dieser Ansicht zu entnehmen ist, kann sich der lichte Querschnitt des an den zweiten Abschnitt 25 anschließenden Ausgabebereiches A gegenüber dem zweiten Abschnitt 25 sprunghaft erweitern. Hierdurch lässt sich eine Verbesserung der Abgabe des Strohs erzielen.

Gemäß dem dargestellten Ausführungsbeispiel ist die sprunghafte Querschnittsänderung im Wesentlichen im mittleren Bereich der Abscheideeinrichtung 2 vorgesehen, vorzugsweise im Übergangsbereich zwischen zwei Abscheidekörben 22a, 22b. Alternativ ist es denkbar, dass die Anzahl der sprunghaften Querschnittsänderungen entlang der axialen Erstreckung des Abscheidebereiches S einem ganzzahligen Quotienten der Anzahl aller Abscheidekörbe 22a, 22b entspricht. Alternativ oder zusätzlich hierzu kann vorgesehen sein, dass eine asymmetrische Anordnung der sprunghaften Querschnittsänderungen entlang der axialen Erstreckung der Abscheideeinrichtung 2 vorgesehen ist. Hierbei kann sich eine abgestufte Anordnung mehrerer sprunghafter Querschnittsänderungen zumindest entlang des Abscheidebereiches S zwischen den Übergangsbereichen benachbarter Abscheidekörbe 22a, 22b einstellen, wobei die Anzahl von Abscheidekörben 22a, 22b zwischen den jeweiligen sprunghaften Querschnittsänderungen nicht konstant ist.

**Bezugszeichenliste**

| | | | |
|---|---|---|---|
| **1** | Mähdrescher | **DR** | Rotationsrichtung |
| **2** | Trenneinrichtung | **E** | Einlaufbereich |
| **3** | Rotor | **S** | Abscheidebereich |
| **4** | Rotorgehäuse | **A** | Ausgabebereich |
| **5a** | Erstes Gehäuseelement | | |
| **5b** | Zweites Gehäuseelement | | |
| **6a** | Erstes Abscheidesegment | | |
| **6b** | Zweites Abscheidesegment | | |
| **7** | Räderpaar | | |
| **8** | Räderpaar | | |
| **9** | Werkzeug | | |
| **10** | Schrägförderer | | |
| **11** | Dreschvorrichtung | | |
| **12** | Vorbeschleunigungstrommel | | |
| **13** | Dreschtrommel | | |
| **14** | Zuführtrommel | | |
| **15** | Dreschkorb | | |
| **16** | Leitstege | | |
| **17** | Trennrotormantel | | |
| **18** | Reinigungsgebläse | | |
| **19** | Reinigungseinrichtung | | |
| **20** | Vorbereitungsboden | | |
| **21** | Förderboden | | |
| **22a** | Erster Abscheidekorb | | |
| **22b** | Zweiter Abscheidekorb | | |
| **23** | Einlaufabschnitt | | |
| **24** | Erster Abschnitt | | |
| **25** | Zweiter Abschnitt | | |

## Patentansprüche

1. Mähdrescher (1), mit einem nach dem Tangentialflussprinzip arbeitenden Dreschvorrichtung (11) und einer der Dreschvorrichtung (11) nachgeordneten, nach dem Axialflussprinzip arbeitenden Abscheideeinrichtung (2), welche zumindest einen mit sich radial nach außen erstreckenden Werkzeugen (9) versehenen Rotor (3) sowie diesen zumindest abschnittsweise in Umfangsrichtung umgebende Abscheidesegmente (6a, 6b) und Gehäuseelemente (5a, 5b), zur Separierung von Bestandteilen aus einem Erntegutstrom aufweist, **dadurch gekennzeichnet, dass** die Abscheideeinrichtung (2) in axialer Richtung des Rotors (3) eine sprunghafte Änderung des lichten Querschnitts zwischen einem ersten, aus zumindest einem ersten Abscheidesegment (6a) und zumindest einem ersten Gehäuseelement (5a) gebildeten Abschnitt (24) und zumindest einem weiteren Abschnitt (25), der aus jeweils zumindest einem von dem ersten Abschnitt (24) abweichend dimensionierten zweiten Abscheidesegment (6b) und einem zweiten Gehäuseelement (5b) gebildet ist, aufweist.

2. Mähdrescher (1) nach Anspruch 1, **dadurch gekennzeichnet, dass** der lichte Querschnitt des ersten Abschnittes (24) kleiner ist, als der lichte Querschnitt des zumindest einen weiteren Abschnittes (25).

3. Mähdrescher (1) nach einem der Ansprüche 1 oder 2, **dadurch gekennzeichnet, dass** der lichte Querschnitt des ersten Abschnittes (24) und der lichte Querschnitt des zumindest einen weiteren Abschnittes (25) entlang ihrer jeweiligen axialen Erstreckung im Wesentlichen gleichbleibend ist.

4. Mähdrescher (1) nach einem der Ansprüche 1 bis 3, **dadurch gekennzeichnet, dass** der Rotor (3) entlang seiner axialer Erstreckung über den ersten Abschnitt (24) und den zumindest einen weiteren Abschnitt (25) hinweg einen gleichbleibenden Außendurchmesser aufweist.

5. Mähdrescher (1) nach einem der Ansprüche 1 bis 4, **dadurch gekennzeichnet, dass** die auf dem Rotor (3) angeordneten Werkzeuge (9) im Bereich des ersten Abschnittes (24) eine geringere radiale Erstreckung nach außen aufweisen, als die Werkzeuge (9) im Bereich des zumindest einen weiteren Abschnittes (25).

6. Mähdrescher (1) nach Anspruch 5, **dadurch gekennzeichnet, dass** sich die Anordnung von Werkzeugen (9) geringerer radialer Erstreckung auf dem Rotor (3) in axialer Richtung über den ersten Abschnitt (24) hinaus abschnittsweise in den zumindest einen weiteren Abschnitt (25) erstrecken.

7. Mähdrescher (1) nach einem der Ansprüche 1 bis 3, **dadurch gekennzeichnet, dass** der Rotor (3) entlang seiner axialer Erstreckung innerhalb des ersten Abschnittes (24) einen anderen Außendurchmesser aufweist, als entlang seiner axialen Erstreckung innerhalb des zumindest einen weiteren Abschnittes (25) hinweg.

8. Mähdrescher (1) nach einem der Ansprüche 1 bis 7, **dadurch gekennzeichnet, dass** die Abscheidefläche des aus ersten Abscheidekörben (22a) bestehenden ersten Abscheidesegmentes (6a) des ersten Abschnittes (24) unabhängig von der Abscheidefläche des aus zweiten Abscheidekörben (22b) bestehenden zweiten Abscheidesegmentes (6b) des zumindest einen weiteren Abschnittes (25) einstellbar ist.

9. Mähdrescher (1) nach Anspruch 8, **dadurch gekennzeichnet, dass** die Abscheideflächen der ersten Abscheidekörbe (22a) des ersten Abschnittes (24) unabhängig voneinander einstellbar sind.

10. Mähdrescher (1) nach einem der Ansprüche 1 bis 9, **dadurch gekennzeichnet, dass** der Abstand der ersten Abscheidekörbe (22a) und der zweiten Abscheidekörbe (22b) zu dem Rotor (3) veränderbar ist.

11. Mähdrescher (1) nach einem der Ansprüche 1 bis 9, **dadurch gekennzeichnet, dass** die sprunghafte Änderung des lichten Querschnittes im Wesentlichen im mittleren Bereich der Abscheideeinrichtung (2) auftritt.

12. Mähdrescher (1) nach einem der Ansprüche 1 bis 9, **dadurch gekennzeichnet, dass** die Anzahl sprunghafter Querschnittsänderungen einem ganzzahligen Quotienten der Gesamtzahl von an der Abscheideeinrichtung (2) vorgesehenen Abscheidekörben (22a, 22b) entspricht.

13. Mähdrescher (1) nach einem der Ansprüche 1 bis 9, **dadurch gekennzeichnet, dass** eine asymmetrische Anordnung der sprunghaften Querschnittsänderungen entlang der axialen Erstreckung der Abscheideeinrichtung (2) vorgesehen ist.

14. Mähdrescher (1) nach einem der Ansprüche 1 bis 13, **dadurch gekennzeichnet, dass** im Übergang zum Abgabebereich (A) der Abscheideeinrichtung (2) eine weitere sprunghafte Querschnittsänderung vorgesehen ist, wobei der lichte Querschnitt des Abgabebereiches (A) größer ist, als der lichte Querschnitts des zumindest einen weiteren Abschnittes (25) der Abscheideeinrichtung (2).

## Claims

1. A combine harvester (1) comprising a threshing device (11) operating on the tangential flow principle and a separating device (2) which is arranged downstream of the threshing device (11) and which operates on the axial flow principle and which has at least one rotor (3) provided with radially outwardly extending tools (9) and separating segments (6a, 6b) and housing elements (5a, 5b) at least portion-wise surrounding the rotor in the peripheral direction for separating constituent parts from a crop material flow, **characterised in that** the separating device (2) in the axial direction of the rotor (3) has an abrupt change in the internal cross-section between a first portion (24) formed from at least one first separating segment (6a) and at least one first housing element (5a) and at least one further portion (25) which is formed from at least one respective second separating segment (6b) which is of different dimensions from the first portion (24) and a second housing element (5b).

2. A combine harvester (1) according to claim 1 **characterised in that** the internal cross-section of the first portion (24) is smaller than the internal cross-section of the at least one further portion (25).

3. A combine harvester (1) according to one of claims 1 and 2 **characterised in that** the internal cross-section of the first portion (2) and the internal cross-section of the at least one further portion (25) is substantially constant along its respective axial extent.

4. A combine harvester (1) according to one of claims 1 to 3 **characterised in that** the rotor is of a constant outside diameter along its axial extent over the first portion (24) and the at least one further portion (25).

5. A combine harvester (1) according to one of claims 1 to 4 **characterised in that** the tools (9) arranged on the rotor (3) in the region of the first portion (24) are of a smaller radial extent outwardly than the tools (9) in the region of the at least one further portion (25).

6. A combine harvester (1) according to claim 5 **characterised in that** the arrangement of tools (9) of smaller radial extent on the rotor (3) extends in the axial direction beyond the first portion (24) portion-wise into the at least one further portion (25).

7. A combine harvester (1) according to one of claims 1 to 3 **characterised in that** along its axial extent within the first portion (24) the rotor (3) is of another outside diameter than along its axial extent within the at least one further portion (25).

8. A combine harvester (1) according to one of claims 1 to 7 **characterised in that** the separating surface of the first separating segment (6a), comprising first separating concaves (22a), of the first portion (24) is adjustable independently of the separating surface of the second separating segment (6b), comprising second separating concaves (22b), of the at least one further portion (25).

9. A combine harvester (1) according to claim 8 **characterised in that** the separating surfaces of the first separating concaves (22a) of the first portion (24) are adjustable independently of each other.

10. A combine harvester (1) according to one of claims 1 to 9 **characterised in that** the spacing of the first separating concaves (22a) and the second separating concaves (22b) relative to the rotor (3) is variable.

11. A combine harvester (1) according to one of claims 1 to 9 **characterised in that** the abrupt change in the internal cross-section occurs substantially in the central region of the separating device (2).

12. A combine harvester (1) according to one of claims 1 to 9 **characterised in that** the number of abrupt changes in cross-section corresponds to an integral quotient of the total number of separating concaves (22a, 22b) provided at the separating device (2).

13. A combine harvester (11) according to one of claims 1 to 9 **characterised in that** there is provided an asymmetric arrangement of the abrupt changes in cross-section along the axial extent of the separating device (2).

14. A combine harvester (1) according to one of claims 1 to 13 **characterised in that** provided in the transition to the discharge region (A) of the separating device (2) is a further abrupt change in cross-section, wherein the internal cross-section of the discharge region (A) is larger than the internal cross-section of the at least one further portion (25) of the separating device (2).

## Revendications

1. Moissonneuse-batteuse (1) comprenant un dispositif de battage (11) fonctionnant selon le principe du flux tangentiel et un équipement séparateur (2) qui est disposé à la suite du dispositif de battage (11) et fonctionne selon le principe du flux axial et qui comporte au moins un rotor (3) muni d'outils (9) s'étendant radialement vers l'extérieur ainsi que des segments séparateurs (6a, 6b) et des éléments de carter (5a, 5b) entourant celui-ci au moins par endroits dans la direction circonférentielle pour séparer des éléments constitutifs d'un flux de récolte, **caractérisée en ce que**, dans la direction axiale du rotor (3), l'équipement séparateur (2) présente une brusque modification de la section transversale intérieure entre une première portion (24), formée d'au moins un premier segment séparateur (6a) et d'au moins un premier élément de carter (5a), et au moins une portion supplémentaire (25) qui est formée respectivement d'au moins un second segment séparateur (6b) dimensionné différemment de la première portion (24) et d'un second élément de carter (5b).

2. Moissonneuse-batteuse (1) selon la revendication 1, **caractérisée en ce que** la section transversale intérieure de la première portion (24) est inférieure à la section transversale intérieure de la au moins une portion supplémentaire (25).

3. Moissonneuse-batteuse (1) selon une des revendications 1 ou 2, **caractérisée en ce que** la section transversale intérieure de la première portion (24) et la section transversale intérieure de la au moins une portion supplémentaire (25) sont sensiblement constantes selon leur extension axiale respective.

4. Moissonneuse-batteuse (1) selon une des revendications 1 à 3, **caractérisée en ce que** le rotor (3) présente un diamètre extérieur constant selon son extension axiale sur toute la première portion (24) et la au moins une portion supplémentaire (25).

5. Moissonneuse-batteuse (1) selon une des revendications 1 à 4, **caractérisée en ce que** les outils (9) disposés sur le rotor (3) dans la zone de la première portion (24) présentent une extension radiale vers l'extérieur inférieure à celle des outils (9) dans la zone de la au moins une portion supplémentaire (25).

6. Moissonneuse-batteuse (1) selon la revendication 5, **caractérisée en ce que** l'agencement d'outils (9) d'extension radiale inférieure sur le rotor (3) s'étend dans la direction axiale au-delà de la première portion (24), par endroits jusque dans la au moins une portion supplémentaire (25).

7. Moissonneuse-batteuse (1) selon une des revendications 1 à 3, **caractérisée en ce que** le rotor (3) présente, selon son extension axiale, à l'intérieur de la première portion (24), un autre diamètre extérieur que, selon son extension axiale, à l'intérieur de la au moins une portion supplémentaire (25).

8. Moissonneuse-batteuse (1) selon une des revendications 1 à 7, **caractérisée en ce que** la surface de séparation du premier segment séparateur (6a) de la première portion, lequel est constitué de premières corbeilles de séparation (22a), est réglable indépendamment de la surface de séparation du second segment séparateur (6b) de la au moins une portion supplémentaire (25), lequel est constitué de secondes corbeilles de séparation (22b).

9. Moissonneuse-batteuse (1) selon la revendication 8, **caractérisée en ce que** les surfaces de séparation des premières corbeilles de séparation (22a) de la première portion (24) sont réglables indépendamment les unes des autres.

10. Moissonneuse-batteuse (1) selon une des revendications 1 à 9, **caractérisée en ce que** la distance des premières corbeilles de séparation (22a) et des secondes corbeilles de séparation (22b) au rotor (3) est variable.

11. Moissonneuse-batteuse (1) selon une des revendications 1 à 9, **caractérisée en ce que** la brusque modification de la section transversale intérieure survient sensiblement dans la zone centrale de l'équipement séparateur (2).

12. Moissonneuse-batteuse (1) selon une des revendications 1 à 9, **caractérisée en ce que** le nombre de brusques modifications de section transversale correspond à un quotient entier du nombre total de corbeilles de séparation (22a, 22b) prévues sur l'équipement séparateur (2).

13. Moissonneuse-batteuse (1) selon une des revendications 1 à 9, **caractérisée en ce qu'**un agencement asymétrique des brusques modifications de section transversale est prévu selon l'extension axiale de l'équipement séparateur (2).

14. Moissonneuse-batteuse (1) selon une des revendications 1 à 13, **caractérisée en ce qu'**à la transition avec la zone de sortie (A) de l'équipement séparateur (2) est prévue une brusque modification supplémentaire de section transversale, la section transversale intérieure de la zone de sortie (A) étant alors plus grande que la section transversale intérieure de la au moins une portion supplémentaire (25) de l'équipement séparateur (2).
